# EUROPÄISCHE PATENTSCHRIFT

(11) **EP 3 108 204 B1**
(45) Veröffentlichungstag und Bekanntmachung des Hinweises auf die Patenterteilung: **12.07.2017**
(21) Anmeldenummer: 16717541.3
(22) Anmeldetag: 10.03.2016
(51) Int. Cl.: G01B 11/30, G01B 21/30, G01B 5/28

(54) **VERFAHREN ZUR TEMPORÄREN ARRETIERUNG EINES MIKROSTRUKTUR- UND/ODER RAUHEITSMESSGERÄTS, MIKROSTRUKTUR- UND/ODER RAUHEITSMESSGERÄT ZUR DURCHFÜHRUNG DES VERFAHRENS SOWIE ANORDNUNG EINES MIKROSTRUKTUR- UND/ODER RAUHEITSMESSGERÄTS UND EINES MESSOBJEKTS**
METHOD FOR TEMPORARILY LOCKING A MICROSTRUCTURE AND/OR ROUGHNESS MEASURING DEVICE, MICROSTRUCTURE AND/OR ROUGHNESS MEASURING DEVICE FOR CARRYING OUT THE METHOD, AND ASSEMBLY OF A MICROSTRUCTURE AND/OR ROUGHNESS MEASURING DEVICE AND A MEASUREMENT OBJECT
PROCÉDÉ DE BLOCAGE TEMPORAIRE D'UN APPAREIL DE MESURE DE RUGOSITÉ ET/OU DE MICROSTRUCTURES, APPAREIL DE MESURE DE RUGOSITÉ ET/OU DE MICROSTRUCTURES POUR LA MISE EN OEUVRE DU PROCÉDÉ ET SYSTÈME COMPOSÉ D'UN APPAREIL DE MESURE DE RUGOSITÉ ET/OU DE MICROSTRUCTURES ET D'UN OBJET DE MESURE

(30) Priorität: 30.03.2015 DE 102015104859
(43) Veröffentlichungstag der Anmeldung: 28.12.2016
(73) Patentinhaber: Breitmeier Messtechnik GmbH, 76275 Ettlingen (DE)
(72) Erfinder: BREITMEIER, Ulrich, 76287 Rheinstetten (DE)
(74) Vertreter: Geitz Truckenmüller Lucht Christ
(86) Internationale Anmeldenummer: PCT/DE2016/100107
(87) Internationale Veröffentlichungsnummer: WO 2016/155697

(56) Entgegenhaltungen:
- EP-A1- 2 631 592
- DE-A1-102007 012 654
- DE-A1-102007 035 064

## Beschreibung

Die Erfindung betrifft ein Verfahren zur temporären Arretierung eines einen Messsensor enthaltenden Messgeräteteils eines Mikrostruktur- und/oder Rauheitsmessgeräts in einer von einer Bohrungswand begrenzten Bohrung eines Messobjekts, wobei während der Messung der Mikrostruktur- und/oder der Rauheit der Bohrungswand mittels des Messsensors der Messgeräteteil des Mikrostruktur- und/oder Rauheitsmessgeräts oder das den Messgeräteteil enthaltende Mikrostruktur- und/oder Rauheitsmessgerät in der Bohrung mittels eines an dem Mikrostruktur- und/oder Rauheitsmessgerät befestigten Arretierungsmittels unter Ausbildung einer auf die Bohrungswand wirkenden Anpresskraft derart verspannt ist, dass der den Messsensor enthaltende Messgeräteteil in der Bohrung, vorzugsweise relativ zu deren Bohrungswand unbeweglich, an der Bohrungswand arretiert ist. Die Erfindung betrifft auch ein Mikrostruktur- und/oder Rauheitsmessgerät zur Durchführung des erfindungsgemäßen Verfahrens, das einen Messgeräteteil umfasst, der wenigstens einen Messsensor zur Messung der Mikrostruktur- und/oder der Rauheit einer Bohrungswand einer von der Bohrungswand begrenzten Bohrung eines Messobjekts enthält, wobei der Messgeräteteil oder das Mikrostruktur- und/oder Rauheitsmessgerät zur Messung der Mikrostruktur und/oder der Rauheit der Bohrungswand mittels des Messsensors, in die Bohrung überführbar ist, und das ein Arretierungsmittel zum Verspannen des Messgeräteteils oder des den Messgeräteteil enthaltenden Mikrostruktur- und/oder Rauheitsmessgeräts in der Bohrung mit einer Anpresskraft enthält. Die Erfindung betrifft außerdem eine Anordnung eines derartigen Mikrostruktur- und/oder Rauheitsmessgeräts und eines Messobjekts, das eine mit einer Bohrungswand begrenzte Bohrung aufweist.

Rauheits- bzw. Profilmesstaster sind bewährte und weit verbreitete Messinstrumente zur Beurteilung der geometrischen Oberflächenqualität von Werkstücken, zur Erfassung der Mikrostruktur bzw. der Oberflächenrauheit. Diese Instrumente besitzen eine Tastnadelspitze aus Diamant oder, im Falle eines Profilmesstasters, eine Metall- oder Glaskugel, mit welcher die Werkstückoberfläche abgetastet wird, indem der Taster mittels eines motorisierten Vorschubs über die Oberfläche bewegt, insbesondere gezogen, wird. Die Tastnadelspitzen weisen einen Spitzenradius auf, der kleiner ist als 5 Mikrometer oder 2 Mikrometer oder 500 Nanometer oder 200 Nanometer oder 100 Nanometer oder 50 Nanometer oder 30 Nanometer oder 20 Nanometer oder 10 Nanometer oder 5 Nanometer. Der Vorschub kann als separates Gerät oder im Taster integriert sein. Normalerweise sind keine weiteren Funktionen in den heute handelsüblichen Messgeräten integriert. Das Funktionsprinzip ist immer ähnlich: Die Tastnadel ist an einem Hebel befestigt, welcher geeignet gelagert ist, zum Beispiel mittels eines Drehlagers, und um einen bestimmten Winkel ausgelenkt werden kann. Die Tastnadel kann jedoch auch an einem Biegebalken bzw. "Cantilever" befestigt sein. Die durch die Werkstückoberfläche über die Tastspitze induzierte Auslenkung wird von einem Messsystem, meist induktiv, kapazitiv, piezoresistiv oder optisch, gemessen, digitalisiert und an die Auswerteelektronik ausgegeben.

Gemessen wird mit einem derartigen Taster üblicherweise ein so genannter Tastschnitt, also ein Linienprofil. Es gibt jedoch auch spezielle Messgeräte, mit denen alternativ oder zusätzlich ein Flächenprofil und/oder eine Krümmung bzw. ein Radius, beispielsweise ein Innenradius, gemessen werden kann. Aufgrund der verschiedensten Einflüsse ist es ratsam, von Zeit zu Zeit eine Kalibrierüberprüfung der Messgerätekomponenten bzw. Funktionen durchzuführen. Während sich die Funktion der Elektronikmodule leicht durch geeignete elektronische oder programmierte Prüfsequenzen testen lässt, ist dies bei den mechanischen Funktionen etwas umständlicher. Die ordnungsgemäße Kalibrierung sollte für die folgenden Messgerätekomponenten regelmäßig überprüft werden: ordnungsgemäße Gestalt und Steigung der Messsystemkennlinie, geometrische Integrität der Tastspitze sowie gegebenenfalls die Linearität der Referenzebene für den Tastervorschub.

Bei der berührungslosen als auch berührenden Messung der Mikrostruktur und Rauheit von Werkstückoberflächen, insbesondere der Laufflächen von Zylindern und Buchsen, ist es eine wesentliche Voraussetzung für eine ungestörte Datenerfassung, dass das Messgerät bzw. der Messtaster oder Messsensor in relativer Ruhe bleibt zur zu messenden Oberfläche. Dies ist dann gegeben, wenn Werkstück und Messwertaufnahmegerät während des Messvorganges fest miteinander verbunden sind. Dies kann man dadurch erreichen, dass man den Messwertaufnehmer gegen die Werkstückoberfläche drückt. Da eine Oberflächenmessung ein zeitlich begrenzter Vorgang ist, ist es wichtig, dass die Kraftaufbringung kurzfristig, ohne Werkzeug, preisgünstig und automatisiert erfolgt, insbesondere wenn der Messvorgang Teil eines automatisierten Prozesses ist.

Ein Verfahren, ein Mikrostruktur- und/oder Rauheitsmessgerät und eine Anordnung mit den jeweils eingangs erwähnten Merkmalen sind aus der DE 10 2007 035 064 A1 bzw. der parallelen EP 1 887 311 A2 oder der DE 10 2007 012 654 A1 der Anmelderin bekannt geworden.

Diese Konstruktion ist jedoch vergleichsweise aufwendig und benötigt vergleichsweise viel Platz, so dass dessen Einsatz auf vergleichsweise große Bohrungen beschränkt ist. Abgesehen davon können dort bei der Verspannung bzw. Arretierung der Messsonde in der zu vermessenden Bohrung konstruktionsbedingt erhebliche Anpresskräfte auftreten, die über der Messzeit zu einer unerwünschten Messwertdrift führen können.

Es ist deshalb eine Aufgabe der Erfindung, die Nachteile insbesondere dieses Standes der Technik zu vermeiden. Diese Aufgabe wird in überraschend einfach erscheinender Art und Weise durch die Merkmale der Ansprüche 1, 7 und 8 gelöst.

Gemäß einer ganz besonders bevorzugten Ausführungsvariante des erfindungsgemäßen Verfahrens kann vorgesehen sein, dass die Anpresskraft oder ein resultierender Anpressdruck während der Messung der Mikrostruktur und/oder der Rauheit der Bohrungswand mittels des Messsensors, mittels des Regelungsmittels konstant gehalten wird. Dadurch kann das Auftreten einer anpresskraftbedingten Messwertdrift über der Messzeit vermieden bzw. verhindert werden.

Gemäß einer bevorzugten Ausgestaltung des erfindungsgemäßen Verfahrens kann vorgesehen sein, dass der den Messsensor enthaltende Messgeräteteil mittels wenigstens eines an dem Mikrostruktur- und/oder Rauheitsmessgerät befestigten Druckluftzylinders und/oder elektrisch oder motorisch oder pneumatisch ausfahrbaren, vorzugsweise starren, Abstützkörpers in der Bohrung, vorzugsweise relativ zu der Bohrungswand unbeweglich, an der Bohrungswand arretiert wird und/oder dass der den Messsensor enthaltende Messgeräteteil durch Aufblasen eines an dem Mikrostruktur- und/oder Rauheitsmessgerät befestigten, aufblasbaren, flexiblen Behälters in der Bohrung, vorzugsweise relativ zu der Bohrungswand unbeweglich, an der Bohrungswand arretiert wird.

Gemäß einer bevorzugten Weiterbildung des erfindungsgemäßen Verfahrens kann vorgesehen sein, dass der den Messsensor enthaltende Messgeräteteil während der Messung der Mikrostruktur- und/oder der Rauheit der Bohrungswand von seiner Aufhängung entkoppelt wird bzw. ist.

Bei dem Mikrostruktur- und/oder Rauheitsmessgerät kann es sich um einen Rauheits- und/oder Profilmesstaster oder um ein Interferometer oder um ein konfokales Messgerät handeln.

Es versteht sich, dass der Fachmann die vorstehenden Merkmale und Maßnahmen im Rahmen der Ausführbarkeit beliebig kombinieren kann.

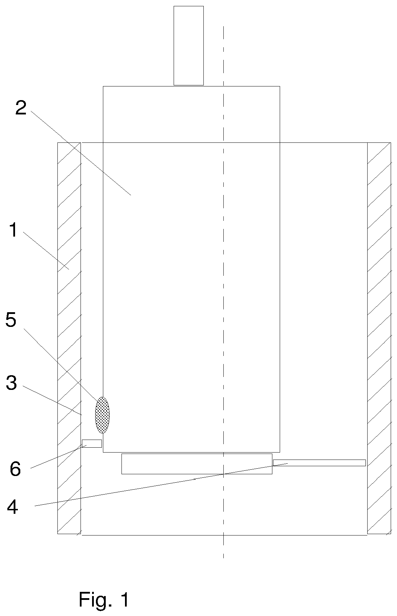

Weitere Merkmale, Vorteile und Gesichtspunkte der Erfindung ergeben sich aus den Ansprüchen und aus dem nachfolgenden Beschreibungsteil, in dem bevorzugte Ausführungsbeispiele der Erfindung beschrieben sind, auch anhand der einzigen Figur 1.
- Figur 1: zeigt eine Anordnung eines Messgeräts und eines Messobjekts in Form eines Motorzylinders bzw. Zylinderrohrs.

Das Messobjekt 1 weist eine Bohrung auf, in welche das Messgerät mit einem einen Messsensor enthaltenden Messgeräteteil in Form eines Messkopfes 2 überführt ist.

Oft ist das Messgerät selbst kaum kleiner als die Zylinderbohrung. Für eine vibrationskompensierte Messung ist ein mechanischer Schluss des Messgeräts mit der Zylinderwand vorteilhaft. Dann gibt es keine Relativbewegung zwischen dem Messsensor bzw. Messwertaufnehmer und dem Messobjekt 1. Externe Vibrationen haben dann nur noch wenig Einfluss. Zum Einführen des Messgeräts in den Zylinder 1 soll die Arretiervorrichtung, welche die Bewegungsblockierung des Messsensors bzw. Messwertaufnehmers im Zylinder 1 bewirkt, möglichst wenig Platz einnehmen. Der Blockiervorgang soll sich programmgesteuert auslösen und aufheben lassen und selbstverständlich das Werkstück 1 nicht beschädigen.

Vorgeschlagen wird als Mittel zur Arretierung eines Messsensors bzw. Messwertaufnehmers in einem dazu geeigneten Umfeld, beispielsweise einem Motorzylinder oder einer Laufbuchse, ein relativ zu dem Messgeräteteil 2 bewegbares, insbesondere ausfahrbares, aktives Abstützelement 4. Dabei kann es sich beispielsweise um einen ausfahrbaren Stab bzw. Zylinder handeln. Das aktive Abstützelement 4 kann beispielsweise elektrisch oder pneumatisch aktiviert sein bzw. werden. Das aktive Abstützelement 4 stützt sich, vorzugsweise nur während des Messvorganges, auf der dem Messfeld 3 gegenüberliegenden Seite der Bohrungswand 1 ab. Wird das Messgerät, beispielsweise ein Interferometerkopf oder ein konfokaler Sensorkopf, bewegt, wird das aktive Abstützelement 4 zurückgezogen.

Auf der Seite des Objektivs 5 eines optischen Messsensors oder auf der Seite eines messenden Tasters ist, sinnvollerweise bevorzugt in der Nähe des Arbeitsabstandes, ein stationäres bzw. relativ zu dem Messgerät unbewegliches, passives Abstützelement 6 am Messgerät angebracht, welches als Gegenelement zu dem relativ zu dem Messgerät beweglichen Abstützelement 4 dient. Im aktivierten Zustand ist somit der Messkopf 2 im Zylinder verspannt.

Damit die Verspannung der Messsonde nicht zu einer Messwertdrift führt, wird die Anpresskraft bzw. wird der Anpressdruck während der Messung konstant und auf einer geeigneten Höhe gehalten. Dazu ist wenigstens ein Kraftmesssensor an wenigstens einem Abstützelement der Abstützelemente 4, 6 angebracht. Mittels einer Regelungseinrichtung wird abhängig von dem Ausgangssignal des Kraftmesssensors die Anpresskraft bzw. der Anpressdruck und/oder die Verfahrbewegung der Sondenaufhängung geregelt. Insbesondere kann man damit das motorische Anfahren und Anlegen der Messsonde an die Werkstückwand detektieren und Verspannungen des Messkopfes 2 vermeiden. Idealerweise wird bei einer pneumatisch aktivierten Verspannmimik der Luftweg zu der Druckluftpumpe während des Messvorganges getrennt bzw. geschlossen, damit keine Vibrationen übertragen werden. Stattdessen kann der Luftdruck über ein Reservoir aufrechterhalten werden. Bei motorischer Verspannung kann entsprechend die Motorregelung ausgeschaltet werden. Im verspannten Zustand kann ein optischer Messkopf dennoch über interne Verstellelemente fokussiert werden.

Anstelle einer starren mechanischen Arretierung kann auch ein aufblasbarer, flexibler Behälter zur Fixierung bzw. Arretierung des Messgeräts in der Zylinderbohrung 1 dienen, beispielsweise ein Ballon, ein Kissen, ein Schlauch oder ein Faltbeutel. Der flexible Behälter kann im gas- bzw. luftleeren bzw. gas- bzw. luftarmen Zustand einfach am Messgerät verstaut werden. Dort nimmt er kaum Platz weg. Der flexible Behälter kann sich beim und nach dem Aufblasen an einer geeigneten Wand, insbesondere an der hinsichtlich seiner Mikrostruktur und/oder Rauheit zu vermessenen Bohrungswand der Bohrung des Werkstücks 1, abstützen und dadurch den den Messsensor bzw. den Messwertaufnehmer enthaltenden Messgeräteteil 2 gegen das Werkstück 1 drücken. Die Andrück- bzw. Anpresskraft lässt sich durch Regelung des Gas- bzw. Luftdrucks in dem flexiblen Behälter regeln. Dazu kann der flexible Behälter einen Gaseinlassstutzen aufweisen. Das Gas, vorzugsweise Luft, kann über eine Druckgas- bzw. Druckluftleitung oder über eine separate Pumpe zugeführt werden. Die Form des flexiblen Behälters kann bei Bedarf an die örtlichen Gegebenheiten angepasst sein bzw. werden.

Vorzugsweise weisen der Messwertaufnehmer, Messsensor, Messtaster oder das Messgerät auf der Seite des Messfühlers bzw. eines optischen Messlichtstrahls eine geeignete Nocke oder mindestens ein relativ zu dem Messgeräteteil bzw. zu dem Messkopf 2 unbewegliches, starres, passives Abstützelement 6 auf. Das passive Abstützelement nimmt die Andrück- bzw. Anpresskraft des aktiven Abstützelements 4 auf und gewährleistet den richtigen Arbeits- bzw. Messabstandabstand zur Bohrungswand. Im Fall eines optischen Messgeräts befindet sich dann das Objektiv nahe des Arbeitsabstandes bzw. im Scharfstellbereich. Im Fall eines Messtasters mit Tastkörper befindet sich dieser dann innerhalb des Messbereichs. Das passive Abstützelement 6, das als Abstützfuß ausgebildet sein kann, ist fest am Sondengehäuse 2 montiert. Es mag sinnvoll sein, den Messkopf 2 während der programmgesteuerten Fixierung bzw. Arretierung in der Zylinderbohrung von seiner Aufhängung zu entkoppeln.

### Bezugszeichenliste:

- 1: Messobjekt/Motorzylinder/Zylinderrohr/Werkstück/ Bohrungswand
- 2: Messkopf/Messgeräteteil/Messsonde/Sondengehäuse
- 3: Messfeld
- 4: (bewegliches/ausfahrbares/aktives) Abstützelement/ Stab/Zylinder
- 5: Objektiv
- 6: (unbewegliches/stationäres/passives) Abstützelement

## Patentansprüche

1. Verfahren zur temporären Arretierung eines einen Messsensor enthaltenden Messgeräteteils eines Mikrostruktur- und/oder Rauheitsmessgeräts in einer von einer Bohrungswand begrenzten Bohrung eines Messobjekts, wobei während der Messung der Mikrostruktur- und/oder der Rauheit der Bohrungswand (1) mittels des Messsensors, der Messgeräteteil (2) des Mikrostruktur- und/oder Rauheitsmessgeräts oder das den Messgeräteteil (2) enthaltende Mikrostruktur- und/oder Rauheitsmessgerät mittels eines an dem Mikrostruktur- und/oder Rauheitsmessgerät befestigten Arretierungsmittels unter Ausbildung einer auf die Bohrungswand (1) wirkenden Anpresskraft derart verspannt ist, dass der den Messsensor enthaltende Messgeräteteil (2) in der Bohrung an der Bohrungswand (1) arretiert ist,
**dadurch gekennzeichnet,**
**dass** das Mikrostruktur- und/oder Rauheitsmessgerät einen Kraftmesssensor zur Messung der Anpresskraft und ein Steuerungs- oder Regelungsmittel zur Steuerung oder Regelung der Anpresskraft enthält, und dass während der Messung der Mikrostruktur und/oder der Rauheit der Bohrungswand (1) mittels des Messsensors, die Anpresskraft mittels des Kraftmesssensors erfasst wird, wobei abhängig von einem resultierenden Ausgangssignal des Kraftmesssensors die Anpresskraft entweder auf einem voreingestellten Wert beibehalten wird oder mittels des Steuerungsmittels gesteuert oder mittels des Regelungsmittels geregelt wird.

2. Verfahren nach Anspruch 1, **dadurch gekennzeichnet, dass** die Anpresskraft während der Messung der Mikrostruktur und/oder der Rauheit der Bohrungswand mittels des Messsensors, mittels des Regelungsmittels konstant gehalten wird.

3. Verfahren nach einem der vorstehenden Ansprüche, **dadurch gekennzeichnet, dass** der den Messsensor enthaltende Messgeräteteil (2) mittels wenigstens eines an dem Mikrostruktur- und/oder Rauheitsmessgerät befestigten Druckluftzylinders in der Bohrung arretiert wird.

4. Verfahren nach einem der vorstehenden Ansprüche, **dadurch gekennzeichnet, dass** der den Messsensor enthaltende Messgeräteteil (2) mittels wenigstens eines an dem Mikrostruktur- und/oder Rauheitsmessgerät befestigten, elektrisch oder motorisch oder pneumatisch ausfahrbaren Abstützkörpers (4) in der Bohrung arretiert wird.

5. Verfahren nach einem der vorstehenden Ansprüche, **dadurch gekennzeichnet, dass** der den Messsensor enthaltende Messgeräteteil durch Aufblasen eines an dem Mikrostruktur- und/oder Rauheitsmessgerät befestigten, aufblasbaren, flexiblen Behälters in der Bohrung arretiert wird.

6. Verfahren nach einem der vorstehenden Ansprüche, **dadurch gekennzeichnet, dass** der den Messsensor enthaltende Messgeräteteil (2) während der Messung der Mikrostruktur- und/oder der Rauheit der Bohrungswand von seiner Aufhängung entkoppelt wird bzw. ist.

7. Mikrostruktur- und/oder Rauheitsmessgerät zur Durchführung des Verfahrens nach einem der vorstehenden Ansprüche, das einen Messgeräteteil (2) umfasst, der wenigstens einen Messsensor zur Messung der Mikrostruktur- und/oder der Rauheit einer Bohrungswand (1) einer von der Bohrungswand (1) begrenzten Bohrung eines Messobjekts enthält, wobei der Messgeräteteil (2) oder das Mikrostruktur- und/oder Rauheitsmessgerät zur Messung der Mikrostruktur und/oder der Rauheit der Bohrungswand (1) mittels des Messsensors, in die Bohrung überführbar ist, und das ein Arretierungsmittel zum Verspannen des Messgeräteteils (2) oder des den Messgeräteteil (2) enthaltenden Mikrostruktur- und/oder Rauheitsmessgeräts in der Bohrung mit einer Anpresskraft an der Bohrungswand (1) enthält,
**dadurch gekennzeichnet,**
**dass** das Mikrostruktur- und/oder Rauheitsmessgerät einen Kraftmesssensor zur Messung der Anpresskraft und ein Steuerungs- oder Regelungsmittel zur Steuerung oder Regelung der Anpresskraft sowie einen Druckluftzylinder und/oder einen elektrisch oder motorisch oder pneumatisch ausfahrbaren Abstützkörper (4) und/oder einen aufblasbaren, flexiblen Behälter, zur Arretierung des Messgeräteteils (2) in der Bohrung an der Bohrungswand (1) enthält.

8. Anordnung eines Mikrostruktur- und/oder Rauheitsmessgeräts nach Anspruch 7 und eines Messobjekts, das eine mit einer Bohrungswand (1) begrenzte Bohrung aufweist,
**dadurch gekennzeichnet,**
**dass** der den Messsensor enthaltende Messgeräteteil (2) in der Bohrung angeordnet und mittels des Druckluftzylinders oder mittels des elektrisch oder motorisch oder pneumatisch ausgefahrenen Abstützkörpers (4) und/oder mittels des aufgeblasenen, flexiblen Behälters unter Ausbildung einer auf die Bohrungswand (1) wirkenden Anpresskraft derart mit der Bohrungswand (1) verspannt ist, dass der den Messsensor enthaltende Messgeräteteil (2) in der Bohrung an der Bohrungswand (1) arretiert ist.

## Claims

1. Method of temporarily locking a measuring instrument part, which includes a measuring sensor, of a microstructure measuring and/or roughness measuring instrument in a bore, which is bounded by a bore wall, of an object to be measured, wherein during the measurement of the microstructure and/or the roughness of the bore wall (1) by means of the measuring sensor the measuring instrument part (2) of the microstructure measuring and/or roughness measuring instrument or the microstructure measuring and/or rough measuring instrument including the measuring instrument part (2) is so clamped by way of locking means, which is fastened to the microstructure measuring and/or roughness measuring instrument, under formation of a pressing force acting on the bore wall (1) that the measuring instrument part (2) including the measuring sensors is locked in the bore to the bore wall (1), **characterised in that** the microstructure measuring and/or roughness measuring instrument includes a force measuring sensor for measuring the pressing force and control or regulating means for controlling or regulating the pressing force and that during the measurement of the microstructure and/or roughness of the bore wall (1) by means of the measuring sensor the pressing force is detected by means of the force measuring sensor, wherein depending on a resulting output signal of the force measuring sensor the pressing force is either maintained to a preset value or is controlled by way of the control means or regulated by way of the regulating means.

2. Method according to claim 1, **characterised in that** the pressing force during the measurement of the microstructure and/or the roughness of the bore wall by means of the measuring sensor is kept constant by way of the regulating means.

3. Method according to one of the preceding claims, **characterised in that** the measuring instrument part (2) including the measuring sensor is locked in the bore by means of at least one compressed air cylinder fastened to the microstructure measuring and/or roughness measuring instrument.

4. Method according to any one of the preceding claims, **characterised in that** the measuring instrument part (2) including the measuring sensor is locked in the bore by means of at least one support body (4) which is fastened to the microstructure measuring and/or roughness measuring instrument and can be moved out electrically, by motor or pneumatically.

5. Method according to any one of the preceding claims, **characterised in that** the measuring instrument part including the measuring sensor is locked in the bore by inflation of an inflatable flexible container fastened to the microstructure measuring and/or roughness measuring instrument.

6. Method according to any one of the preceding claims, **characterised in that** the measuring instrument part (2) including the measuring sensor is decoupled from its suspension during measurement of the microstructure and/or the roughness of the bore wall.

7. Microstructure measuring and/or roughness measuring instrument for carrying out the method according to any one of the preceding claims, which comprises a measuring instrument part (2) which includes at least one measuring sensor for measuring the microstructure and/or the roughness of a bore wall (1) of a bore, which is bounded by the bore wall (1), of an object to be measured, wherein the measuring instrument part (2) or the microstructure measuring and/or roughness measuring instrument for measuring the microstructure and/or the roughness of the bore wall (1) by means of the measuring sensor is transferrable into the bore, and which includes locking means for clamping the measuring instrument part (2) of the microstructure measuring and/or roughness measuring instrument, which includes the measuring instrument part (2), in the bore to the bore wall (1) by a pressing force, **characterised in that** the microstructure measuring and/or roughness measuring instrument includes a force measuring sensor for measuring the pressing force and control or regulating means for controlling or regulating the pressing force as well as a compressed air cylinder and/or a support body (4), which can be moved out electrically, by motor or pneumatically, and/or an inflatable flexible container for locking the measuring instrument part (3) in the bore to the bore wall (1).

8. Arrangement of a microstructure measuring and/or roughness measuring instrument according to claim 7 and an object to be measured, which has a bore bounded by a bore wall (1), **characterised in that** the measuring instrument part (2) including the measuring sensor is arranged in the bore and so clamped to the bore wall (1) by means of the compressed air cylinder or by means of the support body (4), which can be moved out electrically, by motor or pneumatically, and/or by means of the inflatable flexible container with formation of a pressing force acting on the bore wall (1) that the measuring instrument part (2) including the measuring sensor is locked in the bore to the bore wall (1).

## Revendications

1. Procédé de blocage temporaire d'une partie, contenant un capteur de mesure, d'un appareil de mesure de la microstructure et/ou de la rugosité dans un alésage, délimité par une paroi d'alésage, d'un objet de mesure, selon lequel, pendant la mesure de la microstructure et/ou de la rugosité de la paroi d'alésage (1) au moyen du capteur de mesure, la partie d'appareil de mesure (2) de l'appareil de mesure de la microstructure et/ou de la rugosité ou l'appareil de mesure de la microstructure et/ou de la rugosité contenant la partie d'appareil de mesure (2) est serré(e) au moyen d'un moyen de blocage fixé à l'appareil de mesure de la microstructure et/ou de la rugosité en créant une force d'application agissant sur la paroi d'alésage (1) de telle sorte que la partie d'appareil de mesure (2) contenant le capteur de mesure soit bloquée dans l'alésage contre la paroi d'alésage (1),
**caractérisé en ce**
**que** l'appareil de mesure de la microstructure et/ou de la rugosité contient un capteur de force pour mesurer la force d'application et un moyen de commande ou de régulation pour commander ou réguler la force d'application, et que pendant la mesure de la microstructure et/ou de la rugosité de la paroi d'alésage (1) au moyen du capteur de mesure, la force d'application est détectée au moyen du capteur de force, la force d'application étant maintenue à une valeur préréglée ou commandée au moyen du moyen de commande ou régulée au moyen du moyen de régulation en fonction d'un signal de sortie résultant du capteur de force.

2. Procédé selon la revendication 1, **caractérisé en ce que** pendant la mesure de la microstructure et/ou de la rugosité de la paroi d'alésage au moyen du capteur de mesure, la force d'application est maintenue constante au moyen du moyen de régulation.

3. Procédé selon l'une des revendications précédentes, **caractérisé en ce que** la partie d'appareil de mesure (2) contenant le capteur de mesure est bloquée dans l'alésage au moyen d'au moins un vérin pneumatique fixé à l'appareil de mesure de la microstructure et/ou de la rugosité.

4. Procédé selon l'une des revendications précédentes, **caractérisé en ce que** la partie d'appareil de mesure (2) contenant le capteur de mesure est bloquée dans l'alésage au moyen d'au moins un corps d'appui (4) fixé à l'appareil de mesure de la microstructure et/ou de la rugosité et déployable électriquement, pneumatiquement ou par un moteur.

5. Procédé selon l'une des revendications précédentes, **caractérisé en ce que** la partie d'appareil de mesure (2) contenant le capteur de mesure est bloquée dans l'alésage par gonflage d'un récipient gonflable flexible fixé à l'appareil de mesure de la microstructure et/ou de la rugosité.

6. Procédé selon l'une des revendications précédentes, **caractérisé en ce que** la partie d'appareil de mesure (2) contenant le capteur de mesure est découplée de sa suspension pendant la mesure de la microstructure et/ou de la rugosité de la paroi d'alésage.

7. Appareil de mesure de la microstructure et/ou de la rugosité pour mettre en oeuvre le procédé selon l'une des revendications précédentes, qui comprend une partie d'appareil de mesure (2) qui contient au moins un capteur de mesure pour mesurer la microstructure et/ou la rugosité d'une paroi d'alésage (1) d'un alésage, délimité par la paroi d'alésage (1), d'un objet de mesure, la partie d'appareil de mesure (2) ou l'appareil de mesure de la microstructure et/ou de la rugosité pouvant être transféré(e) dans l'alésage pour mesurer la microstructure et/ou la rugosité de la paroi d'alésage (1) au moyen du capteur de mesure, et qui contient un moyen de blocage pour serrer la partie d'appareil de mesure (2) ou l'appareil de mesure de la microstructure et/ou de la rugosité contenant la partie d'appareil de mesure (2) dans l'alésage avec une force d'application contre la paroi d'alésage (1),
**caractérisé en ce**
**que** l'appareil de mesure de la microstructure et/ou de la rugosité contient un capteur de force pour mesurer la force d'application et un moyen de commande ou de régulation pour commander ou réguler la force d'application ainsi qu'un vérin pneumatique et/ou un corps d'appui (4) déployable électriquement, pneumatiquement ou par un moteur et/ou un récipient gonflable flexible pour bloquer la partie d'appareil de mesure (2) dans l'alésage contre la paroi d'alésage (1).

8. Agencement d'un appareil de mesure de la microstructure et/ou de la rugosité selon la revendication 7 et d'un objet de mesure qui présente un alésage délimité par une paroi d'alésage (1),
**caractérisé en ce**
**que** la partie d'appareil de mesure (2) contenant le capteur de mesure est disposée dans l'alésage et, au moyen du vérin pneumatique ou au moyen du corps d'appui (4) déployable électriquement, pneumatiquement ou par un moteur et/ou au moyen du récipient gonflé flexible, en créant une force d'application agissant sur la paroi d'alésage (1), serrée avec la paroi d'alésage (1) de telle sorte que la partie d'appareil de mesure (2) contenant le capteur de mesure soit bloquée dans l'alésage contre la paroi d'alésage (1).
